# EUROPÄISCHE PATENTSCHRIFT

(11) **EP 3 356 861 B1**
(45) Veröffentlichungstag und Bekanntmachung des Hinweises auf die Patenterteilung: **06.11.2024**
(21) Anmeldenummer: 16785089.0
(22) Anmeldetag: 14.09.2016
(51) Int. Cl.: G01V 1/20, G01S 7/521, G10K 11/00, B63B 21/66

(54) **SCHALLWANDLERANORDNUNG, SCHLEPPSONAR, WINDE, SCHLEPPSCHIFF UND VERFAHREN ZUM AUSBRINGEN UND/ODER EINHOLEN EINER SCHALLWANDLERANORDNUNG**
SOUND TRANSDUCER ASSEMBLY, TOWED ARRAY SONAR, WINCH, TUG, AND METHOD FOR RELEASING AND/OR RETRIEVING A SOUND TRANSDUCER ASSEMBLY
ENSEMBLE DE TRANSDUCTEURS ACOUSTIQUES, SONAR REMORQUÉ, TREUIL, REMORQUEUR ET PROCÉDÉ DE MISE À L'EAU ET/OU DE HALAGE D'UN ENSEMBLE DE TRANSDUCTEURS ACOUSTIQUES

(30) Priorität: 02.10.2015 DE 102015116750
(43) Veröffentlichungstag der Anmeldung: 08.08.2018
(73) Patentinhaber: ATLAS ELEKTRONIK GmbH, 28309 Bremen (DE)
(72) Erfinder: BOCHENTIN, Thorsten, 28209 Bremen (DE)
(74) Vertreter: thyssenkrupp Intellectual Property GmbH
(86) Internationale Anmeldenummer: PCT/DE2016/100432
(87) Internationale Veröffentlichungsnummer: WO 2017/054795

(56) Entgegenhaltungen:
- US-A1- 2009 154 295
- US-A1- 2013 121 114

## Beschreibung

Die Erfindung betrifft eine Schallwandleranordnung zum Senden und/oder Empfangen von Wasserschallsignalen, wobei die Schallwandleranordnung eine Antenne mit mehreren Schallwandlern und ein Schleppkabel aufweist und mittels eines Schleppschiffes im Wasser schleppbar ist. Des Weiteren betrifft die Erfindung ein Schleppsonar zum Empfangen und/oder Senden von Wasserschallsignalen, ein Schleppschiff und ein Verfahren zum Ausbringen und/oder Einholen einer Schallwandleranordnung und/oder eines Schleppsonars und zum Empfangen und/oder Senden von Wasserschallsignalen.

Herkömmliche Schleppantennen und/oder Schleppsonare zum Empfangen und/oder Senden von Wasserschallsignalen werden im Wasser getaucht mittels eines Schleppschiffes geschleppt, wobei die Schlepptiefe der Schleppantenne und/oder des Schleppsonars durch die Länge und/oder das Gewicht des ausgebrachten Schleppkabels und die Fahrtgeschwindigkeit des Schleppschiffes eingestellt wird. Dadurch richtet sich die Schleppantenne und/oder das Schleppsonar in einer bestimmten Wassertiefe horizontal aus. Hierbei ist die Schlepptiefe immer ein Kompromiss zwischen der Abdeckung der vertikalen Wassersäule und der maximalen horizontalen Ortungsreichweite.

In US 20130121114 A1 wird eine Schleppantenne mit einer Vielzahl von Schallquellen (seismic sources 200, 300) beschrieben. Mehrere Zugkabel 111a, 111b, 121 halten einen Mast 100 in annähernd senkrechter Position. Die oberen Zugkabel 111a, 111b sind über zwei Stäbe (upper bar 113a, lower bar 113b) und zwei Schwimmkörper (floats 112a, 112b) mit dem oberen Ende des Masts 100 verbunden, vgl. Fig. 3. Ein Seitenruder 116 und zwei Höhenruder 126a, 126b stabilisieren die Schleppantenne, während sie durchs Wasser gezogen wird. Die Schleppantenne lässt sich zusammenfalten, vgl. Fig. 8. Zwei Winden 115A, 115B und eine weitere Winde 125 können die Länge der Zugkabel 111a, 111b, 121 verändern.

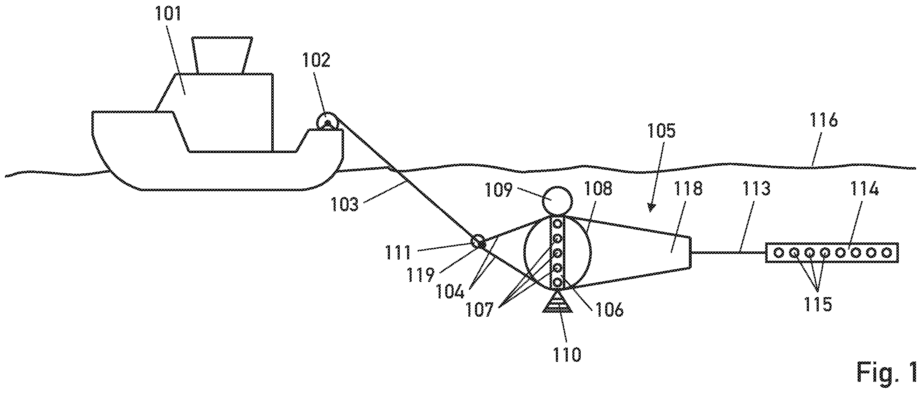

US 20090154295 A1 zeigt eine Schleppantenne mit einer Abfolge von Hydrophonen, die in jeweils einem Gehäuse 116 angeordnet sind und an drei vertikalen Segmenten 13, 15, 16 montiert sind, vgl. Fig. 1. Ein Zugkabel 17 ist mithilfe von zwei Riemen 114 mit dem vertikalen Segment 13 verbunden. An einer Spitze 12 ist ein Stabilisierungselement 119 montiert, am Kiel 14 ein Ballastelement. Die Schleppantenne lässt sich zusammenfalten, vgl. Fig. 7.

Praktisch ist es bei üblichen Schleppgeschwindigkeiten nicht möglich, bekannte Schleppantennen und/oder Schleppsonare vertikal im Wasser auszurichten. Eine vertikale Ausrichtung ist jedoch vorteilhaft, um durch sogenanntes "Beamforming" eine horizontale Bündelung zu erreichen.

Bei Aktivsonaren dient Beamforming dazu die ausgesendete Schallenergie horizontal zu bündeln. Die einzelnen Schallwandler in der Antenne werden koordiniert zeitverzögert angesteuert. Der Schall kann sich bei vertikal ausgerichteter Antenne so in Form eines horizontalen Tellers um die Mitte der vertikalen Antenne konzentriert und für die Ortung genutzt werden. Wird die Antenne horizontal geschleppt kann diese Bündelung nur in der vertikale durchgeführt werden und Schallenergie geht auch direkt zur Meeresoberfläche und zum Meeresboden wo sie für die Ortung nicht nutzbar ist sondern im Gegenteil durch kurze Reflexionswege die Ortung stört.

Beamforming bei Passivsonaren erfolgt rechnerisch durch Messung des zeitverzögerten Empfangs der eingehenden Schallsignale. Dies ermöglicht die Bestimmung des Einfallswinkels des Signals. Bei vertikaler Ausrichtung der Antenne kann so mittels der Elevation die Wassertiefe des Senders abgeleitet werden.

Zudem kann es vorkommen, dass eine vertikal ausgerichtete Schleppantenne und/oder ein Schleppsonar über Wasserschichten hinweg angeordnet sind, sodass Schallanomalien durch Krümmung des Wasserschalls an den Wasserschichten, wie dies beispielsweise bei einer Thermokline und/oder Konvergenzzone auftritt, umgangen und/oder in der Ortung berücksichtigt werden können.

Aufgabe der Erfindung ist es, den Stand der Technik zu verbessern, insbesondere ein verbessertes Konzept für eine Schallwandleranordnung bereitzustellen.

Gelöst wird die Aufgabe durch eine Schallwandleranordnung zum Senden und/oder Empfangen von Wasserschallsignalen, wobei die Schallwandleranordnung eine Antenne mit mehreren Schallwandlern und ein Schleppkabel aufweist und mittels eines Schleppschiffes im Wasser schleppbar ist, wobei die Schallwandleranordnung einen Spannrahmen aufweist, wobei der Spannrahmen bei einem Schleppvorgang in einem Spannzustand gespannt ist, wobei der Spannrahmen ausgebildet ist, den Wasserwiderstand zu nutzen, um die Antenne zu strecken und die Antenne flexibel in einer definierten Ausrichtung in Bezug zu einer gemittelten Wasseroberfläche zu positionieren und wobei die Schallwandleranordnung eine Zuziehvorrichtung aufweist, die ausgebildet ist, die Schallwandleranordnung oder den Spannrahmen zusammenzuziehen, um, zum Einholen der Schallwandleranordnung nach Beendigung des Schleppvorgangs, die Schallwandleranordnung auf die Winde eines Schleppschiffes aufzuwickeln, wobei die Schallwandleranordnung so ausgestaltet ist, im zusammengezogenen Zustand mittels einer Winde vom Schleppschiff in das Wasser ausgebracht zu werden.

Dadurch kann die Antenne flexibel und in eindeutiger Ausrichtung im Wasser positioniert werden. Insbesondere kann die Antenne jede Ausrichtung in Bezug zu einer gemittelten Wasseroberfläche einnehmen, insbesondere jeden Winkel zur gemittelten Wasseroberfläche des gesamten Winkelbereiches von 360°.

Es ist besonders vorteilhaft, dass die Ausrichtung der Antenne entsprechend der Ortungsaufgabe frei wählbar ist und nicht direkt von der Zuggeschwindigkeit des Schleppschiffes abhängt.

Während der Wasserwiderstand beim Versuch des Vertikalen Schlepps die Antenne in die Horizontale dreht oder zumindest durchbiegt nutzt der Spannrahmen gerade diesen Wasserwiderstand um die Antenne zu strecken. Dies ist vorteilhaft da eine Anordnung der Schallwandler in einer fixen Gerade die vorteilhafteste Grundlage für Beamforming darstellt.

Ein wesentlicher Gedanke der Erfindung beruht darauf, dass die Antenne an einem Spannrahmen der Schallwandleranordnung angeordnet ist, wobei mittels des Spannrahmens die flexible, definierte Ausrichtung der Antenne einstellbar ist.

### Folgendes Begriffliche sei erläutert:

Eine "Schallwandleranordnung" ist insbesondere eine Anordnung von mehreren Schallwandlern zum Empfangen und/oder Senden von Wasserschallsignalen. Eine Schallwandleranordnung kann insbesondere eine Antenne aufweisen und/oder ist Bestandteil eines Schleppsonars. Neben einer Antenne oder mehreren Antennen weist die Schallwandleranordnung insbesondere auch ein Schleppkabel oder mehrere Schleppkabel auf. Zudem weist die Schallwandleranordnung einen Spannrahmen auf. Die Schallwandleranordnung kann auch ein Spannkabel oder mehrere Spannkabel aufweisen.

Unter "Wasserschallsignalen" werden insbesondere Schallsignale verstanden, welche im Wasser ausgesendet und/oder empfangen werden.

Eine "Antenne" ist insbesondere eine technische Vorrichtung zum Senden und/oder Empfangen von Schallwellen. Eine Antenne ist insbesondere eine flüssigkeits- und/oder gelgefüllte Schlauchhülle, in welcher eine Vielzahl von beabstandeten elektroakustischen Schallwandlern aufgereiht ist. Die Antenne weist insbesondere passive Schallwandler auf, wie beispielsweise Hydrofone, welche Wasserschallsignale empfangen. Zur akustischen Entkopplung zum Spannrahmen und/oder Schleppkabel weist die Antenne insbesondere ein Dämpfungsmodul oder mehrere Dämpfungsmodule auf. Die Antenne ist insbesondere flexibel, sodass diese in den geraden und/oder gespannten Zustand überführbar und wieder zusammenfaltbar ist.

Ein "Schallwandler" ist insbesondere ein Gerät zum Senden und/oder Empfangen von akustischen Unterwasserschallsignalen, wie dieses in aktiven und/oder passiven Sonaren eingesetzt wird. Der Schallwandler empfängt Unterwasserschallsignale und wandelt diese in ein elektrisches Signal zur Weiterverarbeitung um (Empfänger)und/oder wandelt ein elektrisches Signal in ein akustisches Signal um, wobei letzteres ausgesandt wird (Sender). Beispielsweise werden als Schallwandler Hydrofone unter Wasser eingesetzt, um dort Unterwasserschallgeräusche aufzunehmen. Hierbei wandelt ein Hydrofon den Wasserschall in eine dem Schalldruck entsprechende elektrische Größe. Beim Einsatz unter Wasser wird insbesondere ein Frequenzbereich zwischen circa 10Hz und 1 MHz verwendet.

Ein "Schleppkabel" (auch "Zugkabel" oder "Zugseil" genannt) ist insbesondere ein Kabel, welches durch Zug einen mechanischen Prozess in Gang setzt. Insbesondere überträgt das Schleppkabel die Zugkraft des Schleppschiffes auf eine Schallwandleranordnung, sodass diese im Wasser geschleppt wird. Um die Zugkraft möglichst verzögerungs- und verlustfrei zu übertragen, ist das Schleppkabel insbesondere dehnungsarm, beispielsweise als massiver Draht, ausgeführt. Insbesondere weist das Schleppkabel auch eine oder mehrere Leitungen zum Datenaustausch und/oder zur Energieübertragung auf.

Ein "Schleppschiff" ist ein Schiff, welches einen Gegenstand im Wasser zieht. Bei einem Schleppschiff kann es sich insbesondere um ein Schiff handeln, welches eine Schallwandleranordnung und/oder eine Schleppantenne im Wasser schleppt.

Ein "Spannrahmen" ist insbesondere ein Rahmen oder ein Gebilde, welches eine Antenne einfasst und/oder stabilisiert und/oder ausrichtet. Ein Spannrahmen ist insbesondere flexibel und/oder klappbar und/oder aufspannbar. Bei einem Spannrahmen kann es sich insbesondere um einen unter Zug aufklappbaren Rahmen handeln. Der Spannrahmen kann insbesondere auch durch Seile und/oder Kabel und/oder durch den Rand eines trichterförmigen Segeltuches ausgebildet sein. Insbesondere spannt sich ein Spannrahmen bei einem Schleppvorgang, insbesondere durch den Wasserwiderstand, in einem Spannzustand auf. Beispielsweise kann der Spannrahmen ähnlich wie bei einem Regenschirm durch einen Schieber und die dadurch bewirkte Bewegung von Paragonstangen aufgespannt werden. Ein Spannrahmen kann insbesondere durch einen Drachen und/oder einen Treibanker und/oder ein Tuch und/oder eine Plane ausgebildet werden. Beispielsweise weist der Spannrahmen im aufgespannten Zustand frequenzabhängig einen Durchmesser von 5m bis 50m auf.

Ein "Spannzustand" ist insbesondere ein Zustand, welchen ein Spannrahmen durch Aufziehen und/oder Aufspannen erreicht. Im Spannzustand nimmt der Spannrahmen insbesondere eine größere und/oder maximale Ausdehnung als im Zustand vor dem Aufspannen und/oder Aufziehen ein. Ein Spannzustand kann insbesondere durch eine Zugkraft oder eine andere mechanische Kraft erzielt werden.

Unter "Ausrichtung" wird insbesondere die Orientierung und/oder Lage der Antenne im Raum und/oder unter Wasser verstanden. Insbesondere wird die Ausrichtung in Bezug zu einer gemittelten Wasseroberfläche angegeben. Eine horizontale Ausrichtung ist somit insbesondere parallel zu einer gemittelten Wasseroberfläche. Eine vertikale Ausrichtung ist insbesondere in 90° (orthogonal) zu einer gemittelten Wasseroberfläche.

In einer weiteren Ausführungsform der Schallwandleranordnung ist der Spannrahmen als Treibanker ausgestaltet, sodass die definierte Ausrichtung und/oder eine gerade und/oder gespannte Ausrichtung der Antenne durch Aufziehen des Treibankers in eine stabile Form bei Wirken einer Zugkraft einstellbar ist.

Durch Aufziehen des Treibankers und/oder des Spannrahmens in eine stabile Form wird die Antenne zum einen definiert ausgerichtet und zum anderen liegt diese dadurch gerade und/oder gespannt vor. Somit sind die Positionen der Hydrofone bekannt und unterliegen durch den gespannten Zustand keiner Positionsänderung während des Schleppvorgangs. Folglich kann die Auflösung und Ortung verbessert werden.

Zudem verhindert der Treibanker die Abdrift und hält die Antenne definiert in der Strömung. Somit kann die Schallwandleranordnung auch oberflächennah im Wasser bei schweren Wetterbedingungen eingesetzt werden.

Ein "Treibanker" ist insbesondere ein Gegenstand, welcher die Abdrift- oder die Vorwärtsbewegung eines Schiffes verringert und/oder ein Wasserfahrzeug in der Strömung hält. Ein Treibanker leistet insbesondere einen Widerstand durch den Zug im Wasser ohne Grundberührung. Ein Treibanker kann insbesondere aus einem schwimmenden größeren Gegenstand, beispielsweise einem an einem Seil befestigten Fender, oder auch aus einem trichterförmigen Segeltuchsack (Lenzsack) bestehen. Insbesondere kann oder können an dem Treibanker eine Antenne und/oder eine Schleppantenne angeordnet sein. Beispielsweise bildet der vordere größere Kreis des trichterförmigen Segeltuchsackes im aufgespannten Zustand den Spannrahmen aus. Der Treibanker weist insbesondere zwei oder mehr Spannkabel

(oder Spannseile) auf. Ein oder mehrere Spannkabel des Treibankers können insbesondere auch als Schleppkabel ausgeführt sein. Mindestens ein Spannkabel des Treibankers weist eine Leitung zum Datentransfer und/oder zur Energieübertragung auf, sodass die am Treibanker angeordnete Antenne mit Strom versorgt werden kann und/oder Steuerungssignale vom Schleppschiff übertragen werden können.

Eine "Zugkraft" ist insbesondere eine Kraft, welche einen mechanischen Körper zieht und/oder am Körper auf den Krafterzeuger hinwirkt. Eine Zugkraft wirkt insbesondere im Körper in Richtung vom Befestigungspunkt zum Kraftangriffspunkt.

"Beamforming" ist insbesondere der gerichtete Empfang bzw. die gerichtete Aussendung von Schallsignalen. Dies wird beim Empfang durch Messung der Zeitverzögerung des Signaleingangs bei mehreren Schallwandlern einer Antenne erreicht. Beim Aussenden von Signalen werden die sendenden Schallwandler zeitverzögert aktiviert. Hierdurch können die Empfangs- und Sendewinkel von Schallsignalen bestimmt werden.

Damit die definierte Ausrichtung der Antenne, insbesondere eine vertikale Ausrichtung der Antenne, einstellbar ist, weist oder weisen die Schallwandleranordnung und/oder der Spannrahmen einen Auftriebskörper und/oder ein Gewicht auf.

Dadurch kann die definierte Ausrichtung der Antenne gezielt eingestellt und/oder weiter stabilisiert werden. Es ist besonders vorteilhaft, dass eine stabile vertikale Ausrichtung der Antenne erzielt werden kann, sodass ein stabiles vertikales Beamforming möglich ist. Somit kann eine vertikale Antenne Schall gezielt in der Horizontale versenden oder die Elevation eingehender Signale bestimmen um so eine hochwertige Ortung ermöglichen.

Ein "Auftriebskörper" (auch "Schwimmkörper" genannt) ist insbesondere ein Gegenstand, welcher aufgrund seines Auftriebs durch Verdrängung selbstständig schwimmfähig ist. Bei einem Auftriebskörper kann es sich beispielsweise um eine Boje und/oder eine Schwimmkugel handeln. Auftriebskörper, welche nicht aus einem schwimmfähigen Material bestehen, sind insbesondere hohl und mit Luft und/oder einem leichteren Feststoff gefüllt. Ein Auftriebskörper kann insbesondere auch ein reiner Hohlkörper sein.

Ein "Gewicht" (auch "Ballast" genannt) ist insbesondere ein Gegenstand mit einer bestimmten Masse. Insbesondere weist das Gewicht eine höhere Masse als Wasser auf, sodass das Gewicht einen Abtrieb bewirkt. Das Gewicht kann insbesondere zum Ausgleich von anderen wirkenden Kräften und/oder Drehmomenten verwendet werden.

Erfindungsgemäß kann nach Beendigung des Schleppvorgangs die Schallwandleranordnung mit dem aufgespannten Spannrahmen wieder zusammengefaltet und zum Einholen auf die Winde eines Schleppschiffes aufgewickelt werden. Ebenso kann die Schallwandleranordnung im zusammengezogenen Zustand mittels einer Winde vom Schleppschiff in das Wasser ausgebracht werden. Es ist besonders vorteilhaft, dass dadurch die Schallwandleranordnung auf einer einzigen Trommel einer Winde auf- und/oder abwickelbar ist.

Eine "Zuziehvorrichtung" ist insbesondere eine Vorrichtung, welche die Schallwandleranordnung oder den Spannrahmen zusammenzieht. Insbesondere hebt die Zuziehvorrichtung den Spannzustand wieder auf und/oder verkleinert das Ausmaß der Schallwandleranordnung und/oder des Spannrahmens. Bei der Zuziehvorrichtung kann es sich insbesondere um einen verschiebbaren Ring und/oder eine verschiebbare Hülse und/oder um einen Klappmechanismus handeln. Insbesondere kann mittels der Zuzieheinrichtung eine Kraft auf die Spannkabel des Spannrahmens und/oder Treibankers ausgeübt werden, sodass dieser sich zusammenzieht.

Eine "Winde" ist insbesondere eine Vorrichtung, mit welcher von einem Schleppschiff aus eine Schallwandleranordnung und/oder eine Schleppantenne und/oder ein Schleppkabel in das Wasser ausgebracht und/oder aus dem Wasser eingeholt wird. Insbesondere weist eine Winde eine drehbare Windentrommel zum Auf- und/oder Abwickeln einer Schallwandleranordnung und/oder einer Antenne und/oder eines Schleppkabels und/oder eines Schleppsonars und/oder einer Schleppantenne auf.

Um die Zuzieheinrichtung zu steuern, weist die Zuzieheinrichtung ein Schaltelement, insbesondere einen elektromechanischen Schalter, auf.

Dadurch kann die Zuzieheinrichtung durch eine Steuereinheit eines Sonars und/oder eines Schleppschiffes über das Schlepp- und/oder Spannkabel gezielt angesteuert und ein Schaltvorgang ausgelöst werden.

Ein "Schaltelement" ist insbesondere eine Bauteil, welches mittels zweier elektrisch leitender Materialien oder eines Halbleiterbauelements eine elektrisch leitende Verbindung herstellt oder trennt (Schaltkontakt). Dadurch bewirkt insbesondere das Schaltelement, dass die Zuzieheinrichtung aktiviert wird und die Schallwandleranordnung oder den Spannrahmen zusammenzieht. Insbesondere kann das Schaltelement von einer Steuerung angesteuert werden, insbesondere durch eine Steuerungseinheit eines Sonars und/oder des Schleppschiffes.

In einer weiteren Ausführungsform der Schallwandleranordnung weist die Zuzieheinrichtung einen verschiebbaren Ring auf.

Dadurch kann in einfacher Weise die Schallwandleranordnung und/oder der Spannrahmen aus dem Spannzustand in einen Zustand mit einem geringeren Volumen gebracht werden. Es ist besonders vorteilhaft, dass der Ring von der Seite des Schleppkabels aus über die Spannkabel des Spannrahmens und/oder des Treibankers verschoben wird und dadurch diese zusammenschiebt.

Damit zeitgleich eine vertikale Ortung mittels der Antenne und eine horizontale Ortung mittels einer Schleppantenne durchführbar sind, weist die Schallwandleranordnung und/oder der Spannrahmen eine Schleppantenne auf, wobei die Schleppantenne sich aufgrund einer Zugkraft im Wasser ausrichtet.

Somit ist zeitgleich eine Optimierung der Abdeckung der vertikalen Wassersäule als auch der horizontalen Abdeckung möglich. Die Schallwandleranordnung mit einer Antenne und einer Schleppantenne gemeinsam auf einer einzigen Trommel einer Winde eines Schleppschiffes eingeholt und/oder ausgebracht werden. Dadurch werden der Platzbedarf an Bord des Schleppschiffes und der Bedieneraufwand beim Einholen und/oder Ausbringen reduziert. Auch kann so die Zugkraft auf die Schleppantenne zur Streckung sowohl des vertikal als auch des horizontal ausgerichteten Antennenteils genutzt werden.

In einem weiteren Aspekt der Erfindung wird die Aufgabe gelöst durch ein Schleppsonar zum Empfangen und/oder Senden von Wasserschallsignalen, wobei das Schleppsonar eine zuvor beschriebene Schallwandleranordnung aufweist.

Dadurch kann ein platz- und gewichtssparendes, bedienerfreundliches Schleppsonar mit einer Antenne und/oder einer Schleppantenne bereitgestellt werden, mit dem eine Ortung in beliebiger Ortungsrichtung erfolgen kann.

Folglich sind eine verbesserte Ortung und überhaupt erst eine Ortung in der vertikalen Wassersäule bei einer stabilen vertikalen Position der Antenne möglich. Es ist besonders vorteilhaft, dass das Schleppsonar eine flexible lineare aber doch vertikal gestreckete Antenne aufweisen kann, um die vertikale Wassersäule abzudecken.

Dies ermöglicht kompakte und leichte Bauweise mit vielen relativ kleinen Schallwandlern und damit bei Aktivsonar große Antennensendeenergien bei niedriger Sendeenergie am individuellen Schallwandler zur Vermeidung von Kavitation auch bei Nutzung von sehr niedrigen Sendefrequenzen.

Dagegen müssen insbesondere nach dem Stand der Technik mehrere sogenannte "Free Flodded Rings" in einer festen mechanischen Verbindung direkt übereinander angeordnet in einem sogenannte "Towed Body" eingesetzt werden, sodass eine ständige Kontrolle der Beabstandung und Ausrichtung der Schallwandler zueinander gegeben ist. Dieser "Towed Body" ist allerdings sehr schwer und bedarf signifikanter zusätzlicher Einrichtungen an Bord des Schleppschiffs zum Aus- und Einbringen. Die geringe Anzahl der Schallwandler hier verteilt die Sendelast nur unzureichend so dass die volle Sendeleistung nur bei großer Schlepptiefe freigegeben werden kann da sonst Kavitation am Schallwandler entsteht. Eine andere Alternative gemäß Stand der Technik ist die flexible Verbindung vergleichsweise massiver individueller Schallwandler in einem Linear Array mit einem Ankergewicht und evtl. mit Propulsoren auf verschiedener Tiefe um einem Durchbiegen des Arrays bei Fahrt zu verhindern. Hiermit können hohe Schallpegel in sehr tiefen Frequenzen erreicht werden. Allerdings ist die Geschwindigkeit des Schiffes stark eingeschränkt zwischen der Mindestgeschwindigkeit um das passive horizontale Schlepp zu strecken, 3 Knoten, und der Höchstgeschwindigkeit oberhalb der das aktive Linear Array durchbiegt, 5 Knoten. Die ganze Einrichtung ist sehr massiv (>64 Tonnen) und nur von Schiffen aus einsetzbar welche den Einsatz dieses Sonars als einzigen Existenzzweck haben (SURTASS) .

Ein "Schleppsonar" ist insbesondere eine Vorrichtung zur Ortung von Gegenständen im Raum und unter Wasser mittels ausgesandter und/oder empfangenen Schallimpulse. Insbesondere wird ein Schleppsonar zur seismischen Vermessung des Meeresgrundes und/oder zur Ortung von Gegenständen und Wasserfahrzeugen unter Wasser eingesetzt. Hierzu wird das Schleppsonar insbesondere von einem Schleppfahrzeug getaucht durch das Wasser an einem Schleppkabel gezogen. Bei einem Schleppsonar kann es sich um ein aktives Sonar handeln, welches selbst Schallsignale aussendet und dessen reflektierte Signale empfängt, oder um ein passives Sonar, welches nur ein Empfangsteil aufweist. Ein Schleppsonar kann insbesondere auch ein bistatisches Sonar sein, bei dem sich der Sender auf einer anderen Plattform als der Empfänger befindet. Insbesondere sind dem Schleppsonar eine Antenne und/oder eine Schleppantenne und/oder ein Schleppkabel zugeordnet.

Ferner ist eine Winde für ein Schleppschiff offenbart, wobei mittels der Winde eine zuvor beschriebene Schallwandleranordnung und/oder ein zuvor beschriebenes Schleppsonar auf- und/oder abwickelbar ist.

Dadurch kann die zusammengezogene Schallwandleranordnung auf eine Winde, insbesondere einer einzigen Windentrommel einer Winde, auf- und/oder abgewickelt werden. Somit wird Platz eingespart, da nicht mehrere Winden für mehrere Schleppantennen notwendig sind, und der Bedienaufwand und die Sorgfaltspflicht werden während des Ausbringens und Einholens reduziert.

In einem weiteren Aspekt der Erfindung wird die Aufgabe gelöst durch ein Schleppschiff, wobei das Schleppschiff eine zuvor beschriebene Schallwandleranordnung und/oder einen zuvor beschriebenen Schleppsonar aufweist.

Dadurch kann ein Schleppschiff bereitgestellt werden, bei dem die Ausrichtung der Antenne frei vorgegeben und dadurch die Ortung optimiert werden kann. Vor allem besteht bei diesem Schleppschiff keine direkte Abhängigkeit zwischen Zuggeschwindigkeit und Schlepptiefe und/oder einer horizontaler Ausrichtung der Antenne. Da mehrere Antenne und/oder Schleppantennen kombiniert eingesetzt werden können, weist das Schleppschiff zudem eine höhere Platz- und/oder Gewichtsreserve auf.

In einem weiteren Aspekt der Erfindung wird die Aufgabe gelöst durch ein Verfahren zum Ausbringen und Einholen einer Schallwandleranordnung und/oder eines Schleppsonars und zum Empfangen und/oder Senden von Wasserschallsignalen mittels einer zuvor beschriebenen Schallwandleranordnung und/oder eines zuvor beschriebenen Schleppsonars und/oder eines zuvor beschriebenen Schleppschiffes, mit folgenden Schritten:
- Ausbringen der Schallwandleranordnung und/oder des Schleppsonars in einem zusammengezogenen Zustand mittels der Winde des Schleppschiffes ins Wasser,
- Schalten eines Schaltelementes zur Steuerung der Zuzieheinrichtung, sodass sich eine Zuzieheinrichtung öffnet,,
- Aufziehen eines Spannrahmens durch Wirken einer Zugkraft, sodass die Antenne gerade und/oder gespannt und/oder definiert ausgerichtet wird, wobei der Spannrahmen den Wasserwiderstand nutzt, um die Antenne zu strecken,
- Senden und/oder Empfangen eines Wasserschallsignals und/oder mehrerer Wasserschallsignale mittels der Antenne, sodass das Wasserschallsignal oder die Wasserschallsignale für eine Ortung verwendbar ist oder sind,
- Schalten des Schaltelementes, sodass sich die Zuzieheinrichtung schließt und sich die Schallwandleranordnung zusammenzieht,
- Einholen der Schallwandleranordnung und/oder des Schleppsonars in dem zusammengezogenen Zustand mittels der Winde des Schleppschiffes und Aufwickeln auf der Winde des Schleppschiffs.

Mit dem ersten Schalten eines Schaltelements kann es sich hierbei um die erste Stufe in einem zweistufigen Schaltkonzept handeln. In dem zweiten Schalten des Schaltelements kann die Schließung nach Öffnung einer zweiten Stufe des Schaltelements auch durch die Zugkraft erzeugt werden.

Dadurch kann ein vereinfachtes Verfahren zum Ausbringen und/oder Einholen einer Schallwandleranordnung und/oder eines Schleppsonars und ein verbessertes Verfahren zum Empfangen und/oder Senden von Wasserschallsignalen und zur Ortung bereitgestellt werden. Insbesondere ist ein Orten bei beliebiger Ausrichtung der Antenne unabhängig vom Schleppschiff möglich. Zudem kann simultan sowohl eine Ortung mit vertikaler Abdeckung als auch mit horizontaler Abdeckung im Wasser erfolgen.

Im Weiteren wird die Erfindung anhand eines Ausführungsbeispiels näher erläutert. Es zeigt
- Figur 1: eine stark schematische Darstellung eines Schleppschiffs mit einer Schallwandleranordnung und einem Treibanker im aufgespannten Zustand, und

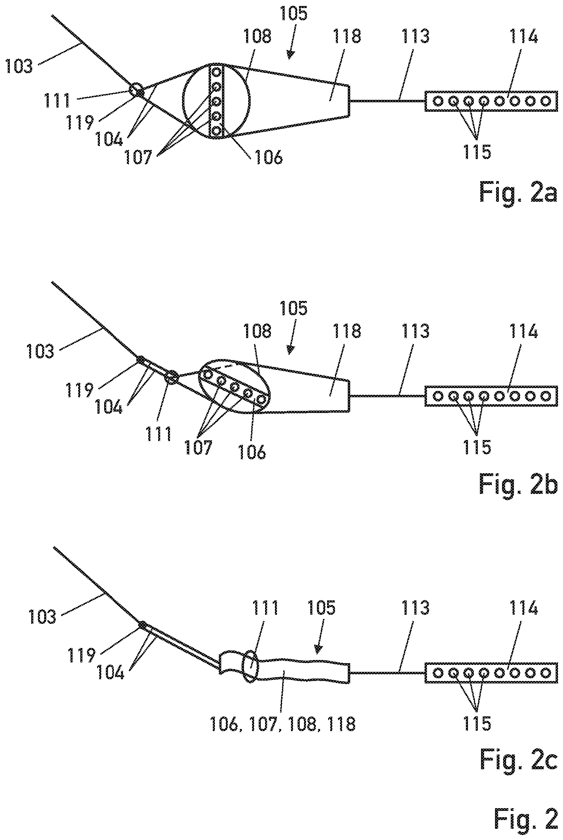

- Figur 2: eine stark schematische Darstellung einer Schallwandleranordnung mit einem schaltbaren Zuziehring in verschiedenen Zuständen (Figur 2a bis 2c) des Zusammenziehens.

Ein Schleppschiff 101 weist am Heck eine Winde 102 auf. Von der Winde 102 ist ein erstes Schleppkabel 103 zu den Spannkabeln 104 einer Schallwandleranordnung 105 im Wasser geführt. Die Schallwandleranordnung 105 weist einen Treibanker 118 mit einem Spannrahmen 108 auf. In dem Spannrahmen 108 ist eine flexible Antenne 106 vertikal zur gemittelten Wasseroberfläche 116 gespannt angeordnet. Die Antenne 106 weist fünf Hydrofone 107 auf. Oben am Spannrahmen 108 ist ein Auftriebskörper 109 und unten ein Gewicht 110 angeordnet. Am zulaufenden Ende des Treibankers 118 ist ein zweites Schleppkabel 113 gefolgt von einer Schleppantenne 114 angeordnet. Die Schleppantenne 114 weist acht Hydrofone 115 auf.

Die Schallwandleranordnung 105 wird über das erste Schleppkabel 103 vom Schleppschiff 101 mit Spannung versorgt und Daten und Steuerungssignale werden übermittelt. Das untere Spannkabel der Spannkabel 104 ist ebenso als Daten- und Energieversorgungsleitung ausgeführt. Am Verbindungspunkt 119 zwischen dem ersten Schleppkabel 103 und den Spannkabeln 104 ist ein schaltbarer Zuziehring 111 angeordnet.

Die Stromversorgung und die Signale der Schleppantenne 114 erreichen erst die Vertikale Antenne 106 und der "Spannrahmen" bzw. Treibanker und wird mittels eines integrierten Kabels über das untere Ende der vertikalen Antenne 106 an die horizontale Antenne weitergeleitet.

Hierzu wird alternativ das Kabel wieder auf die Mitte der vertikalen Streckung zurückgeführt ausbalanciert damit die Schleppantenne 114 mit ihrem Wasserwiderstand den vertikalen Anteil nicht verzerrt. Seitlich betrachtet entsteht so eine Raute. Alternativ wird hier einen zweiter gleitenden Zugring mit Schaltelement eingesetzt.

Folgende Arbeitsschritte werden mit dem Schleppschiff 101, der Winde 102 und der Schallwandleranordnung 105 realisiert:

Die Schallwandleranordnung 105 wird im zusammengezogenen Zustand mittels der Winde 102 des Schleppschiffes 101 ins Wasser ausgebracht. Sobald sich die Schallwandleranordnung 105 im ausreichenden Abstand zum Schleppschiff 101 befindet, wird ein Steuersignal des Schleppschiffs 101 über das erste Schleppkabel 103 zur Schallwandleranordnung 105 übertragen und ein Schaltelement geschaltet, sodass der schaltbare Ziehring 111 sich von den Ansatzpunkten der Spannkabel 104 am zusammengefalteten Spannrahmen 108 bis zum Verbindungspunkt 119 von den Spannkabeln 104 und dem Schleppkabel 103 verschiebt, sodass die Schallwandleranordnung 105 nicht mehr durch den schaltbaren Ziehring 111 zusammengezogen ist. Anschließend erhöht das Schleppschiff 101 die Fahrtgeschwindigkeit, sodass durch Wirken der Zugkraft sich der Spannrahmen 108 und der Treibanker 118 aufziehen und dadurch die Antenne 106 gerade und gespannt vertikal in Bezug zur gemittelten Wasseroberfläche 116 unterstützt durch den Auftriebskörper 109 und das Gewicht 110 ausgerichtet wird.

Mittels der Antenne 108 und der Schleppantenne 114 werden Wasserschallsignale empfangen und die Schallsignale über das untere Spannkabel 104 und das erste Schleppkabel 103 zum Auswerten an das Schleppschiff 101 übertragen und für eine Ortung eines unbekannten Wasserfahrzeuges genutzt. Die Ortung deckt dabei sowohl die vertikale Wassersäule als auch eine horizontale Wasserebene mit hoher Reichweite ab.

Nach Abschluss der Ortung wird über das erste Schleppkabel 103 ein Steuersignal zur Schallwandleranordnung 105 übertragen und das Schaltelement geschaltet, sodass der schaltbare Zuziehring 111 sich vom Verbindungspunkt 119 entlang des unteren Spannkabels der Spannkabel 104 in Richtung des Spannrahmens 108 bewegt. Dadurch werden die beiden Spannkabel 104 zusammengezogen und der Treibanker 118 mit dem Spannrahmen 108 wird gekippt, wodurch sich der Treibanker 118 und der Spannrahmen 108 beginnen zusammenzufalten. Der schaltbare Zuziehring 111 bewegt sich weiter zu den Ansatzpunkten der Spannkabel 104 am Spannrahmen 108, sodass die Schallwandleranordnung 105 mit dem Spannrahmen 108 und dem Treibanker 118 zusammengezogen wird. Dadurch liegt die Schallwandleranordnung 105 zusammen mit der Schleppantenne 114 als ein Schleppstrang vor.

Anschließend wird die Schallwandleranordnung 105 und die Schleppantenne 114 in dem zusammengezogenen Zustand als ein Schleppstrang mittels der Winde 102 des Schleppschiffes 101 auf einer einzigen Windentrommel eingeholt, wobei der Auftriebskörper 109 und das Gewicht 110 von der zusammengezogenen Schallwandleranordnung 105 an Bord des Schleppschiffes vor dem Aufwickeln auf die Windentrommel entkoppelt werden.

### Bezugszeichenliste

- 101: Schleppschiff
- 102: Winde
- 103: erstes Schleppkabel
- 104: Spannkabel
- 105: Schallwandleranordnung
- 106: Antenne
- 107: Hydrofone
- 108: Spannrahmen
- 109: Auftriebskörper
- 110: Gewicht
- 111: schaltbarer Zuziehring
- 113: zweites Schleppkabel
- 114: Schleppantenne
- 115: Hydrofone
- 116: gemittelte Wasseroberfläche
- 118: Treibanker
- 119: Verbindungspunkt

## Patentansprüche

1. Schallwandleranordnung (105) zum Senden und/oder Empfangen von Wasserschallsignalen, wobei die Schallwandleranordnung eine Antenne (106) mit mehreren Schallwandlern (107) und ein Schleppkabel (103, 113) aufweist und mittels eines Schleppschiffes (101) im Wasser schleppbar ist, wobei die Schallwandleranordnung einen Spannrahmen (108) aufweist, wobei der Spannrahmen bei einem Schleppvorgang in einem Spannzustand gespannt ist, wobei der Spannrahmen ausgebildet ist, den Wasserwiderstand zu nutzen, um die Antenne zu strecken und die Antenne flexibel in einer definierten Ausrichtung in Bezug zu einer gemittelten Wasseroberfläche (116) zu positionieren und wobei die Schallwandleranordnung eine Zuziehvorrichtung sowie ein Schaltelement zur Steuerung der Zuziehvorrichtung aufweist, die ausgebildet ist, die Schallwandleranordnung oder den Spannrahmen zusammenzuziehen, um, zum Einholen der Schallwandleranordnung nach Beendigung des Schleppvorgangs, die Schallwandleranordnung auf die Winde eines Schleppschiffes aufzuwickeln, wobei die Schallwandleranordnung so ausgestaltet ist, im zusammengezogenen Zustand mittels einer Winde vom Schleppschiff (101) in das Wasser ausgebracht zu werden.

2. Schallwandleranordnung nach Anspruch 1, **dadurch gekennzeichnet, dass** der Spannrahmen als Treibanker (118) ausgestaltet ist, sodass die definierte Ausrichtung und/oder eine gerade und/oder gespannte Ausrichtung der Antenne durch Aufziehen des Treibankers in eine stabile Form bei Wirken einer Zugkraft einstellbar ist.

3. Schallwandleranordnung nach einem der vorherigen Ansprüche, **dadurch gekennzeichnet, dass** die Schallwandleranordnung und/oder der Spannrahmen einen Auftriebskörper (109) und/oder ein Gewicht (110) aufweist oder aufweisen, sodass die definierte Ausrichtung der Antenne, insbesondere eine vertikale Ausrichtung der Antenne, einstellbar ist.

4. Schallwandleranordnung nach einem der vorherigen Ansprüche, **dadurch gekennzeichnet, dass** die Zuzieheinrichtung ein Schaltelement, insbesondere einen elektromechanischen Schalter, aufweist.

5. Schallwandleranordnung nach einem der vorherigen Ansprüche, **dadurch gekennzeichnet, dass** die Zuzieheinrichtung einen verschiebbaren Ring (111) aufweist.

6. Schallwandleranordnung nach einem der vorherigen Ansprüche, **dadurch gekennzeichnet, dass** die Schallwandleranordnung und/oder der Spannrahmen eine Schleppantenne (114) aufweist, wobei die Schleppantenne sich aufgrund einer Zugkraft im Wasser ausrichtet, sodass zeitgleich eine vertikale Ortung mittels der Antenne und eine horizontale Ortung mittels der Schleppantenne durchführbar sind.

7. Schleppsonar zum Empfangen und/oder Senden von Wasserschallsignalen, **dadurch gekennzeichnet, dass** das Schleppsonar eine Schallwandleranordnung nach einem der Ansprüche 1 bis 6 aufweist.

8. Schleppschiff (101), **dadurch gekennzeichnet, dass** das Schleppschiff eine Schallwandleranordnung nach einem der Ansprüche 1 bis 6 und/oder ein Schleppsonar nach Anspruch 7 aufweist.

9. Verfahren zum Ausbringen und Einholen einer Schallwandleranordnung und/oder eines Schleppsonars und zum Empfangen und/oder Senden von Wasserschallsignalen mittels einer Schallwandleranordnung nach einem der Ansprüche 1 bis 6 und/oder eines Schleppsonars nach Anspruch 7 und/oder eines Schleppschiffes nach Anspruch 8, mit folgenden Schritten:
- Ausbringen der Schallwandleranordnung und/oder des Schleppsonars in einem zusammengezogenen Zustand mittels der Winde des Schleppschiffes ins Wasser,
- Schalten eines Schaltelementes zur Steuerung der Zuzieheinrichtung, sodass sich eine Zuzieheinrichtung öffnet,
- Aufziehen eines Spannrahmens durch Wirken einer Zugkraft, sodass die Antenne gerade und/oder gespannt und/oder definiert ausgerichtet wird, wobei der Spannrahmen den Wasserwiderstand nutzt, um die Antenne zu strecken,
- Senden und/oder Empfangen eines Wasserschallsignals und/oder mehrerer Wasserschallsignale mittels der Antenne, sodass das Wasserschallsignal oder die Wasserschallsignale für eine Ortung verwendbar ist oder sind,
- Schalten des Schaltelementes, sodass sich die Zuzieheinrichtung schließt und sich die Schallwandleranordnung zusammenzieht,
- Einholen der Schallwandleranordnung und/oder des Schleppsonars in dem zusammengezogenen Zustand mittels der Winde des Schleppschiffes und Aufwickeln auf der Winde des Schleppschiffs.

## Claims

1. Sound transducer arrangement (105) for transmitting and/or receiving waterborne sound signals, the transducer arrangement comprising an antenna (106) with a plurality of transducers (107) and a tow cable (103, 113) and being towable in the water by means of a towing vessel (101), the transducer arrangement comprising a tensioning frame (108), the tensioning frame being tensioned in a tensioning state during a towing operation, the tensioning frame being designed to utilise the water resistance in order to stretch the antenna and to position the antenna flexibly in a defined orientation with respect to an averaged water surface (116),
and wherein the transducer arrangement comprises a pulling device and a switching element for controlling the pulling device, which is adapted to pull the transducer arrangement or the tensioning frame together, to wind the sound transducer arrangement onto the winch of a towing vessel in order to retrieve the sound transducer arrangement after completion of the towing process, wherein the sound transducer arrangement is designed to be deployed into the water by means of a winch from the towing vessel (101) in the contracted state.

2. Sound transducer arrangement according to claim 1, **characterised in that** the tensioning frame is designed as a driving anchor (118), so that the defined alignment and/or a straight and/or tensioned alignment of the antenna can be adjusted by pulling the driving anchor into a stable shape when a pulling force is applied.

3. Sound transducer arrangement according to one of the preceding claims, **characterised in that** the sound transducer arrangement and/or the tensioning frame has or have a buoyancy body (109) and/or a weight (110), so that the defined alignment of the antenna, in particular a vertical alignment of the antenna, can be adjusted.

4. Sound transducer arrangement according to one of the preceding claims, **characterised in that** the pull-in device has a switching element, in particular an electromechanical switch.

5. Sound transducer arrangement according to one of the preceding claims, **characterised in that** the closing device has a displaceable ring (111).

6. Sound transducer arrangement according to one of the preceding claims, **characterised in that** the sound transducer arrangement and/or the tensioning frame has a trailing antenna (114), the trailing antenna aligning itself in the water due to a tractive force, so that vertical localization by means of the antenna and horizontal localisation by means of the trailing antenna can be carried out simultaneously.

7. Towed sonar for receiving and/or transmitting waterborne sound signals, **characterised in that** the towed sonar has a sound transducer arrangement according to one of claims 1 to 6.

8. Towing vessel (101), **characterised in that** the towing vessel comprises a transducer arrangement according to one of claims 1 to 6 and/or a towing sonar according to claim 7.

9. Method for deploying and recovering a transducer arrangement and/or a towed sonar and for receiving and/or transmitting waterborne sound signals by means of a transducer arrangement according to any one of claims 1 to 6 and/or a towed sonar according to claim 7 and/or a towed vessel according to claim 8, comprising the following steps:
- Deploying the transducer arrangement and/or the towed sonar in a contracted state into the water by means of the winch of the towed vessel,
- switching a switching element for controlling the pulling device so that a pulling device opens,
- Pulling up a tensioning frame by applying a pulling force so that the antenna is straightened and/or tensioned and/or aligned in a defined manner, whereby the tensioning frame utilizes the water resistance to stretch the antenna,
- transmitting and/or receiving a waterborne sound signal and/or a plurality of waterborne sound signals by means of the antenna, so that the waterborne sound signal or the waterborne sound signals can be used for localization,
- Switching the switching element so that the closing device closes and the transducer arrangement contracts,
- Retrieving the transducer arrangement and/or the towed sonar in the contracted state by means of the winch of the towing vessel and winding it up on the winch of the towing vessel.

## Revendications

1. Ensemble de transducteurs acoustiques (105) pour l'émission et/ou la réception de signaux sonores aquatiques, l'ensemble de transducteurs acoustiques comprenant une antenne (106) avec plusieurs transducteurs acoustiques (107) et un câble de remorquage (103, 113) et pouvant être remorqué dans l'eau au moyen d'un bateau de remorquage (101), l'ensemble de transducteurs acoustiques comprenant un cadre de tension (108), le cadre de tension étant tendu dans un état de tension lors d'une opération de remorquage, le cadre de tension étant conçu pour utiliser la résistance de l'eau, pour étirer l'antenne et positionner l'antenne de manière flexible dans une orientation définie par rapport à une surface d'eau moyenne (116), et dans lequel l'ensemble de transducteurs comprend un dispositif de serrage ainsi qu'un élément de commutation pour commander le dispositif de serrage, qui est conçu pour serrer l'ensemble de transducteurs ou le cadre de serrage, pour enrouler l'ensemble de transducteurs sur le treuil d'un bateau de remorquage afin de récupérer l'ensemble de transducteurs après la fin de l'opération de remorquage, l'ensemble de transducteurs étant conçu de manière à être déployé dans l'eau à l'état contracté au moyen d'un treuil du bateau de remorquage (101).

2. Ensemble de transducteurs acoustiques selon la revendication 1, **caractérisé en ce que** le cadre de tension est conçu comme une ancre flottante (118), de sorte que l'orientation définie et/ou une orientation droite et/ou tendue de l'antenne peut être réglée en remontant l'ancre flottante dans une forme stable sous l'action d'une force de traction.

3. Ensemble de transducteurs acoustiques selon l'une des revendications précédentes, **caractérisé en ce que** l'ensemble de transducteurs et/ou le cadre de tension comporte ou comportent un corps de flottaison (109) et/ou un poids (110), de sorte que l'orientation définie de l'antenne, en particulier une orientation verticale de l'antenne, peut être réglée.

4. Ensemble de transducteurs acoustiques selon l'une des revendications précédentes, **caractérisé en ce que** le dispositif de fermeture présente un élément de commutation, en particulier un commutateur électromécanique.

5. Ensemble de transducteurs acoustiques selon l'une des revendications précédentes, **caractérisé en ce que** le dispositif de fermeture comporte une bague coulissante (111).

6. Ensemble de transducteurs acoustiques selon l'une des revendications précédentes, **caractérisé en ce que** l'ensemble de transducteurs et/ou le cadre de serrage comporte une antenne remorquée (114), l'antenne remorquée s'orientant dans l'eau en raison d'une force de traction, de sorte qu'il est possible de réaliser simultanément une localisation verticale au moyen de l'antenne et une localisation horizontale au moyen de l'antenne remorquée.

7. Sonar remorqué pour la réception et/ou l'émission de signaux sonores aquatiques, **caractérisé en ce que** le sonar remorqué présente un agencement de transducteurs acoustiques selon l'une des revendications 1 à 6.

8. Remorqueur (101), **caractérisé en ce que** le remorqueur comporte un ensemble de transducteurs selon l'une des revendications 1 à 6 et/ou un sonar remorqué selon la revendication 7.

9. Procédé de déploiement et de remontée d'un ensemble de transducteurs acoustiques et/ou d'un sonar de remorquage et de réception et/ou d'émission de signaux hydrosoniques au moyen d'un ensemble de transducteurs acoustiques selon l'une quelconque des revendications 1 à 6 et/ou d'un sonar de remorquage selon la revendication 7 et/ou d'un bateau remorqueur selon la revendication 8, comprenant les étapes suivantes :
- Mise à l'eau de l'ensemble de transducteurs et/ou du sonar de remorquage dans un état contracté au moyen du treuil du bateau de remorquage,
- Commutation d'un élément de commutation pour la commande du dispositif de traction, de sorte qu'un dispositif de traction s'ouvre,
- Remonter un cadre de tension en appliquant une force de traction de sorte que l'antenne soit droite et/ou tendue et/ou orientée de manière définie, le cadre de tension utilisant la résistance de l'eau pour étirer l'antenne,
- l'émission et/ou la réception d'un signal de bruit d'eau et/ou de plusieurs signaux de bruit d'eau au moyen de l'antenne, de sorte que le signal ou les signaux de bruit d'eau sont utilisables pour une localisation,
- Commutation de l'élément de commutation de sorte que le dispositif de fermeture se ferme et que l'ensemble de transducteurs se contracte,
- Récupération de l'ensemble de transducteurs et/ou du sonar de remorquage à l'état contracté au moyen du treuil du bateau de remorquage et enroulement sur le treuil du bateau de remorquage.
